(19) **Europäisches Patentamt / European Patent Office / Office européen des brevets**

(11) **EP 1 445 875 B1**

(12) **EUROPEAN PATENT SPECIFICATION**

(45) Date of publication and mention
of the grant of the patent:
**08.04.2009 Bulletin 2009/15**

(51) Int Cl.:
***H04B 7/06*** (2006.01)

(21) Application number: **04009318.9**

(22) Date of filing: **17.12.1998**

(54) **Near-optimal low-complexity decoding of space-time codes for wireless applications**

Fast-optimale Dekodierung mit reduzierter Komplexität für Raum-Zeit Koden in drahtlosen Verwendungen

Décodage quasi-optimal et de basse complexité pour codes espace-temps pour applications sans fil

(84) Designated Contracting States:
**DE FR GB**

(30) Priority: **23.12.1997 US 68613 P**
**21.04.1998 US 63765**

(43) Date of publication of application:
**11.08.2004 Bulletin 2004/33**

(62) Document number(s) of the earlier application(s) in accordance with Art. 76 EPC:
**98124231.6 / 0 938 194**

(73) Proprietor: **AT&T Mobility II LLC**
**Atlanta, GA 30342 (US)**

(72) Inventors:
• **Lo, Titus**
**Redmond**
**Washington 98052 (US)**
• **Tarokh, Vahid**
**Cambridge, MA 02139 (US)**

(74) Representative: **Grünecker, Kinkeldey,**
**Stockmair & Schwanhäusser**
**Anwaltssozietät**
**Leopoldstrasse 4**
**80802 München (DE)**

(56) References cited:
**GB-A- 2 311 445          GB-A- 2 313 237**
**US-A- 5 274 844**

**Description**

This application claims the benefit of U.S. Provisional Application No. 60/068613, filed December 23, 1997.

This invention relates to wireless systems and, more particularly, to systems having more than one antenna at the receiver and at the transmitter.

Physical constraints as well as narrow bandwidth, co-channel interference, adjacent channel interference, propagation loss and multipath fading limit the capacity of cellular systems. These are severe impairments, which liken the wireless channel to a narrow pipe that impedes the flow of data. Nevertheless, interest in providing high speed wireless data services is rapidly increasing. Current cellular standards such as IS-136 can only provide data rates up to 9.6 kbps, using 30 kHz narrowband channels. In order to provide wideband services, such as multimedia, video conferencing, simultaneous voice and data, etc., it is desirable to have data rates in the range of 64-144 kbps.

Transmission schemes for multiple antenna systems may be part of a solution to the problem of the currently available low data rates. Such schemes were first proposed in papers by Wittneben, and by Seshadri and Winters, where the problem was addressed in the context of signal processing.

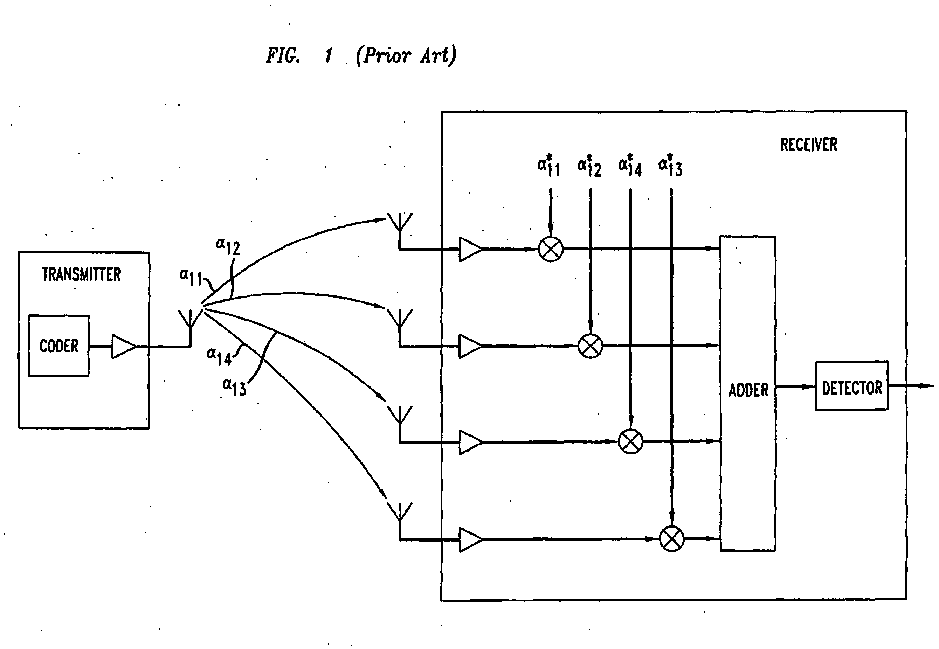

One prior art arrangement having a single transmitter antenna and multiple receiver antennas is shown in FIG. 1. Each of the receiver antennas receives the transmitted signal via a slightly different channel, where each channel $i$ is characterized by transfer function $\alpha_i$. Using an approach known as "Maximum Ratio Combining", the prior art approach to detection contemplates multiplying each received signal that had been influenced by $\alpha_i$ by the complex conjugate signal, $\alpha_i^*$, summed, and then processed.

In a co-pending application titled "Method and Apparatus for Data Transmission Using Space-Time Codes and Multiple Transmit Antennas", filed on May 6, 1997, bearing the No. US 6 115 427, and assigned to the assignee of this invention, a coding perspective was adopted to propose space-time coding using multiple transmit and receive antennas. Space-time coding integrates channel coding, modulation, and multiple transmit antennas to achieve higher data rates, while simultaneously providing diversity that combats fading. It may be demonstrated that adding channel coding provides significant gains over the schemes of Wittneben and Seshadri and Winters. In said co-pending application, space-time codes were designed for transmission using 2-4 transmit antennas. These codes perform extremely well in slowly varying fading environments (such as indoor transmission media). The codes have user bandwidth efficiencies of up to 4 bits/sec/Hz which are about 3-4 times the efficiency of current systems. Indeed, it can be shown that the designed codes are optimal in terms of the trade-off between diversity advantage, transmission rate, decoding complexity and constellation size.

It can also be shown that as the number of antennas is increased, the gain increases in a manner that is not unlike a multi-element antenna that is tuned to, say, a particular direction Unfortunately, however, when maximum likelihood detection is employed at the receiver, the decoding complexity increases when the number of transmit and receive antennas is increased. It would be obviously advantageous to allow a slightly sub-optimal detection approach that substantially reduces the receiver's computation burden.

US 5, 274, 844 A discloses a method for automatically beamforming a radio frequency transmitter having an array antenna. The method includes the steps of determining a transmit equalizer transfer function and receive equalizer transfer function for each array element of the antenna array. The method further includes adaptively beamforming a received signal from a communication unit based upon the determined receive equalizer weights, to provide a receive beamform array. On the receiver side, no antenna diversity is however suggested.

GB 2 313 237 A discloses a communication device including an antenna array connected to a transmitter. The path through the transmitter for each antenna is weighted. Upon receipt of an error signal from a remote device, the weights of the transmitter path are altered. A controller calculates the optimum weights for the transmit path weight circuits based on the received signal levels for each of the antennas.

It is therefore the object of the present invention to provide an improved data signal and a corresponding method for processing the wireless data and a corresponding signal processing apparatus and system for processing wireless date that further increase the performance of the wireless system.

This object is solved by the subject matter of the independent claims.

Preferred embodiments are defined in the dependent claims.

Such an approach is achieved with a receiver arrangement where signals received at a plurality of antennas are each multiplied by a respective constant and then summed prior to being applied to a maximum likelihood detector. The respective constants, $\lambda_j$, where $j$ is an index designating a particular receiver antenna, are derived from a processor that determines the largest eigenvalue of the matrix $\Lambda A(\Lambda^*)^T$, where A is a vector containing the values $\lambda_j$, and $A$ is a matrix containing elements $\alpha_{ij}$, which is the transfer function between the $i$th transmitter antenna to the $j$th receiver antenna The $\alpha_{ij}$ terms are determined in the receiver in conventional ways.

FIG. 1 presents a block diagram of Maximal Ratio Combining detection; and

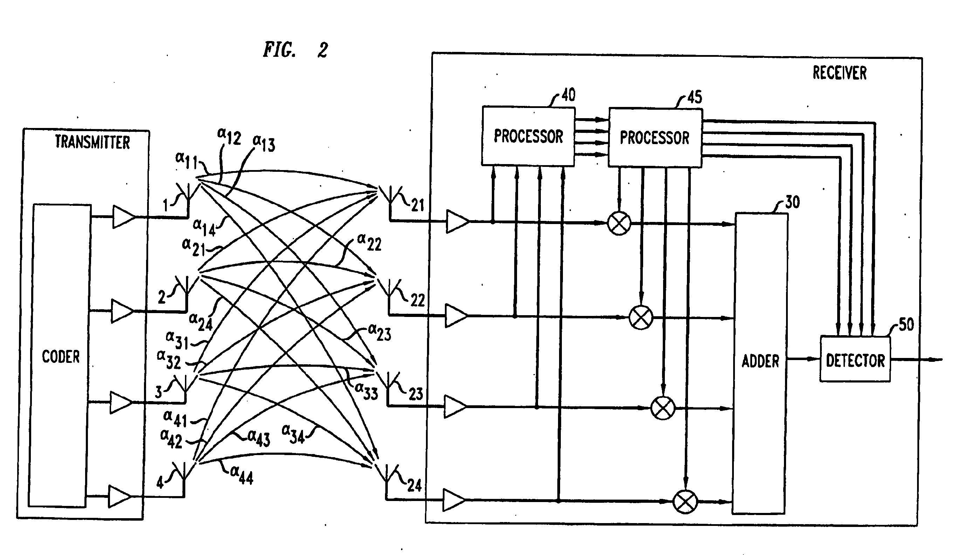

FIG. 2 presents a block diagram of an arrangement including a transmitter having a plurality of antennas, and a receiver having a plurality of antennas coupled to an efficient detection structure.

FIG. 1 presents a block diagram of a receiver in accord with the principles of this invention. It includes a transmitter 10 that has an n plurality of transmitting antenna 1, 2, 3, 4, and a receiver 20 that has an m plurality of receiver antennas 21, 22, 23, 24. The signals received by the receiver's antennas are multiplied in elements 25, 26, 27, and 28, and summed in adder 30. More specifically, the received signal of antenna j is multiplied by a value, $\lambda_j$, and summed. The collection of factors $\lambda_j$ can be viewed as a vector $\Lambda$. The outputs of the receiver antennas are also applied to processor 40 which, employing conventional techniques, determines the transfer functions $\alpha_{ij}$ for $i$=1, 2, 3,..., $n$ and $j$=1, 2, 3,..., $m$. These transfer functions can be evaluated, for example, through the use of training sequences that are sent by the different transmitter antennas, one antenna at a time.

The evaluated $\alpha_{ij}$ signals of processor 40 are applied to processor 45 in FIG. 1 where the multiplier signals $\lambda_j$, $j$=1, 2, 3,..., $m$ are computed. Processor 45 also evaluates a set of combined transfer function values $\gamma_i$, $i$=1, 2, 3,..., $n$ (which are described in more detail below). Signals $\gamma_i$ of processor 45 and the output signal of adder 30 are applied to detector 50 which detects the transmitted symbols in accordance with calculations disclosed below.

It is assumed that the symbols transmitted by the antennas of transmitter 10 have been encoded in blocks of $L$ time frames, and that fading is constant within a frame. A codeword comprises all of the symbols transmitted within a frame, and it corresponds, therefore, to

$$c_1^1 c_1^2 c_1^3 ... c_1^4 c_2^1 c_2^2 c_2^3 ... c_2^4 c_3^1 c_3^2 c_3^3 ... c_3^4 ... c_m^1 c_m^2 c_m^3 ... c_m^4,$$

where the superscript designates the transmitter's antennas and the subscript designates the time of transmission (or position within a frame).

From the standpoint of a single antenna, e.g., antenna 1, the signal that is received at antenna 1 in response to a transmitted symbol $c_t^1$ at time interval $t$ is.:

$$\begin{aligned} R_t &= c_t^1 (\alpha_{11}\lambda_1 + \alpha_{12}\lambda_2 + \alpha_{13}\lambda_3 + ... + \alpha_{1m}\lambda_m) \\ &= c_t^1 \sum_{j=1}^{m} \lambda_j \alpha_{1j} \\ &= c_t^1 \gamma_1 \end{aligned}$$

(when noise is ignored). If each $\lambda_j$ value is set to $\alpha^*_{ij}$, (where $\alpha^*_{ij}$ is the complex conjugate of $\alpha_{1j}$) then the received signal would simply be

$$R_t = c_t^{11} \sum_{i=1}^{m} |\alpha_{11}|^2$$

yielding a constructive addition.

Of course, the values of $\lambda_j$ cannot be set to match $\alpha^*_{1j}$, and concurrently to match the values of $\alpha^*_{ij}$ where $i \neq 1$; and therein lies the difficulty.

When all $n$ of the transmitting antennas are considered, then the received signal is

$$\begin{aligned} R_t &= \sum_{i=1}^{n} \left( c_t^i \sum_{j=1}^{m} \lambda_j \alpha_{ij} \right) \\ &= \sum_{i=1}^{n} c_t^i \gamma_i \end{aligned}$$

In accordance with the present disclosure, the objective is to maximize $\sum_{i=1}^{n}|\gamma_i|^2$ because by doing so, signal $R_t$ contains as much information about $c_i^i, i = 1,2,3,...n$ as is possible. However, it can be easily shown that if a matrix $A$ is constructed such that

$$A = \sum_{i=1}^{n}(\Omega_i{}^*)^T \Omega_i ,$$

where $\Omega_i = (\alpha_{i1}, \alpha_{12}, \alpha_{13}...\alpha_{im})$, then

$$\sum_{i=1}^{n}|\gamma_i|^2 = \Lambda A(\Lambda^*)^T .$$

The receiver, thus, has to maximize $\Lambda A(\Lambda^*)^T$, subject to the constraint $\|\Lambda\|^2 = 1$. The solution to this problem is to choose $\Lambda$ to be the eigenvector of $A$ which corresponds to the maximum eigenvalue of $A$. Accordingly, processor 45 develops the matrix $A$ from the values of $\alpha_{ij}$, finds the eigenvalues of $A$ in a conventional manner, selects the maximum eigenvalue of $A$, and creates the vector $\Lambda$. Once $\Lambda$ is known, processor 45 develops signals $\gamma_t$ for 1=1, 2, 3,..., $n$, (where $\gamma_t = \sum_{j=1}^{m}\lambda_j\alpha_{ij}$ ), and applies them to detector 50. Finally, detector 50 minimizes the metric

$$\sum_{t=1}^{L}\left|R_t - \sum_{i=1}^{n}\gamma_t c_i^t\right|^2$$

from amongst all possible codewords in a conventional manner. As can be seen, this approach reduces the complexity of decoding by almost a factor of $m$.

FIG. 1 depicts separate multipliers to multiply received signals by multiplication factors $\lambda_i$, and it depicts separate blocks for elements 30, 40,45, and 50. It should be understood, however, that different embodiments are also possible. For example, it is quite conventional to incorporate all of the above-mentioned elements in a single special purpose processor, or in a single stored program controlled processor (or a small number of processors). Other modifications and improvements may also be incorporated, without departing from the invention, which is defined in the following claims. Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A method for processing a wireless signal to generate a data signal for use in a wireless receiver, wherein the wireless receiver forms part of a wireless system having a wireless transmitter, the method comprising:

   receiving multiple signals by one of multiple receiver antennas (21, 22, 23, 24) associated with the wireless receiver,
   pre-multiplying each received signal by a selected pre-multiplying value associated with a selected one of the multiple receiver antennas,
   adding the pre-multiplied received signals to generate a sum signal,

   **characterized in that**

the received signals are transmitted by multiple transmitter antennas (1, 2, 3, 4) associated with the wireless transmitter, and

each selected pre-multiplying value is developed from a plurality of transfer function values, wherein each of said transfer function values is associated with one of the multiple transmitter antennas (1, 2, 3, 4) and one of the multiple receiver antennas (21, 22, 23, 24).

2. The method of claim 1, wherein the transfer function values comprise:

a matrix of eigenvectors associated with the transfer function values.

3. The method of claim 1, wherein the multiple transmitting antennas (1, 2, 3, 4) transmit encoded symbols in blocks of multiple time frames, and wherein a codeword comprises all encoded symbols transmitted within a time frame.

4. The method of claim 1, wherein the received signals represent a first block of symbols, and a second block of symbols related to the first block of symbols, wherein each one of the symbols in the first block is related, as a set of symbols, with one of the symbols in the second block of symbols, and wherein one symbol in each set of symbols is a complex conjugate of the other symbol in the set of symbols.

5. The method of claim 1, the method further comprising:

receiving at an $m$ number of receiving antennas (21, 22, 23, 24) the wireless signal,

wherein the wireless signal represents multiple codewords; and
the sum signal is generated by processing the wireless signal by way of maximum likelihood detection to determine the codewords.

6. The method of claim 5, wherein the wireless signal is encoded under a space-time modulation scheme.

7. The method of claim 5, wherein the processing includes computing eigenvectors based on the m number of receiving antennas (21, 22, 23, 24).

8. The method of claim 5, the method being for wireless communication and further comprising:

transmitting said wireless signal which comprises encoded symbols from said multiple transmitting antennas (1, 2, 3, 4);
each one of said multiple receiving antennas (21, 22, 23, 24) receiving transmitted encoded symbols from all of the multiple transmitting antennas (1, 2, 3, 4), wherein a particular transfer function is associated with each transmitting antenna-receiving antenna pair;
generating multiple transfer functions using the received encoded symbols, wherein each transfer function is associated with a transmitting-receiving antenna pair associated with the received encoded symbols;
generating multiple multiplier signals, each associated with a transfer function;
generating multiple combined transfer function values generated from combining the transfer functions; and
wherein said step of processing comprises:

multiplying the received encoded signals of said received wireless signal with a respective multiplier signal;
adding the multiplied signals; and
decoding the received encoded symbols, including computing a subset of a set of all possible values of the received encoded symbols, using the added signals and the combined transfer function values.

9. The method of claim 8, wherein generating the multiple combined transfer function values comprises:

developing a matrix from the transfer function values;
finding eigenvalues of the matrix;
creating a maximum eigenvector of the matrix; and
generating the subset of the set of all possible values of the received encoded symbols from the maximum eigenvector.

10. The method of claim 5, wherein the multiple transmitting antennas (1, 2, 3, 4) transmit the encoded symbols in blocks of multiple time frames, and wherein a codeword comprises all encoded symbols transmitted within a time frame.

**11.** The method of claim 10, wherein a codeword comprises

$$c_1^1 c_1^2 c_1^3 \ldots c_1^4 c_2^1 c_2^2 c_2^3 \ldots c_2^4 c_3^1 c_3^2 c_3^3 \ldots c_3^4 \ldots c_m^1 c_m^2 c_m^3 \ldots c_m^4 .$$

where the superscript designates the transmitter's antenna and the subscript designates the time of transmission.

**12.** The method of claim 11, wherein the combined transfer function values are designated $\gamma_i = \sum_{j=1}^{m} \lambda_j \alpha_{ij}$, wherein $\alpha_{ij}$ is the transfer function between transmitting antenna i to receiving antenna j and $d_j$ is the largest eigenvalue of a matrix containing elements $\alpha_{ij}$ and wherein computing a subset of a set of all possible values of the received encoded symbol comprises minimizing $\sum_{t=1}^{L} \left| R_t - \sum_{i=1}^{n} \gamma_i c_i^i \right|^2$ from among all possible codewords, wherein $R_t$ is the signal received in a single antenna at time interval t.

**13.** A signal processing apparatus for use in a wireless receiver, wherein the wireless receiver forms part of a wireless system having a wireless transmitter employing multiple transmitting antennas (1, 2, 3, 4), and wherein the wireless receiver includes two or more receiving antennas (21, 22, 23, 24) for receiving signals transmitted from the multiple transmitting antennas (1, 2, 3, 4), the signal processing apparatus comprising:

an input section for receiving multiple signals provided by the two or more receiving antennas (21, 22, 23, 24);
a processing section that is coupled to the input section to develop multiplying values from transfer function values associated with the multiple transmitting antennas (1, 2, 3, 4) and associated with the two or more receiving antennas (21, 22, 23, 24), wherein the processing section develops the multiplying values based on a less than optimal computational process;
a multiplying section, coupled to the input section and to the processing section, that multiplies the received signals by the multiplying values to produce multiplied received signals, wherein each multiplying value is developed from a plurality of transfer function values, and wherein each of said plurality of transfer function values is associated with one of the multiple transmitter antennas (1, 2, 3, 4) and one of the multiple receiver antennas (21, 22, 23, 24); and
a summing section (30), coupled to the multiplying section, that receives and adds the multiplied received signals.

**14.** The signal processing apparatus of claim 13, wherein the transfer function values comprise:

a matrix of eigenvectors associated with the transfer function values.

**15.** The signal processing apparatus of claim 13, wherein the multiple transmitting antennas (1, 2, 3, 4) transmit encoded symbols in blocks of multiple time frames, and wherein a codeword comprises all encoded symbols transmitted within a time frame.

**16.** The apparatus of claim 13, comprising:

one or more electronic circuits, wherein the electronic circuits include:

an input portion to receive input signals from each one of multiple receiving antennas (21, 22, 23, 24), wherein a transfer function is associated with each transmitting antenna-receiving antenna pair;
a first signal processing section for generating multiple transfer function values representing channels over which the input signals are received, wherein each transfer function is associated with a transmitting-receiving antenna pair associated with the received encoded symbols;
a second signal processing section for generating multiple combined transfer function values generated from combining the transfer functions;
a multiplier for multiplying the received input signals with a respective combined transfer function value;

an adder coupled to the multiplier for adding the multiplied signals; and
an output portion for outputting the added signals for decoding.

17. The apparatus of claim 16, wherein the second signal processing section generates multiple combined transfer function values by developing a matrix from the transfer function values, finding eigenvalues of the matrix, creating a maximum eigenvector of the matrix, and generating a subset of values from a set of all possible values of received encoded symbols from the maximum eigenvector.

18. The apparatus of claim 16, wherein the input signal includes transmitted codewords, wherein the multiple transmitting antennas transmit the encoded symbols in blocks of multiple time frames, and wherein a codeword comprises all encoded symbols transmitted within a time frame.

19. The system of claim 18, wherein a codeword comprises

$$c_1^1 c_1^2 c_1^3 ... c_1^4 c_2^1 c_2^2 c_2^3 ... c_2^4 c_3^1 c_3^2 c_3^3 ... c_3^4 ... c_m^1 c_m^2 c_m^3 ... c_m^4 .$$

where the superscripts designates the transmitter's antenna and the subscript designates the times of transmission.

20. The apparatus of claim 16, further comprising a decoding circuit coupled to the output portion, wherein the decoding circuit is configured to compute a subset from a set of all possible values of codewords associated with the input signals and by employing the added signals and the combined transfer function values

21. The apparatus of claim 20, wherein the combined transfer function values are designated $\gamma_i = \sum_{j=1}^{m} \lambda_j \alpha_{ij}$, wherein $\alpha_{ij}$ is the transfer function between transmitting antenna i to receiving antenna j and $\lambda_j$ is the largest eigenvalue of a matrix containing elements $\alpha_{ij}$ and wherein the decoding circuit computes a subset from a set of all possible values by minimizing $\sum_{t=1}^{L} \left| R_t - \sum_{i=1}^{n} \gamma_i c_t^i \right|^2$ from among all possible codewords where $R_t$ is the received signal in a single antenna at time interval t.

22. The apparatus of claim 20 wherein the decoding circuit is a maximum likelihood detector.

23. The signal processing apparatus of claim 13, wherein the received signals represent a first block of symbols, and a second block of symbols related to the first block of symbols, wherein each one of the symbols in the first block is related, as a set of symbols, with one of the symbols in the second block of symbols, and wherein one symbol in each set of symbols is a complex conjugate of the other symbol in the set of symbols.

24. The apparatus of claim 16, wherein the input signals represent a first block of symbols, and a second block of symbols related to the first block of symbols, wherein each one of the symbols in the first block is related, as a set of symbols, with one of the symbols in the second block of symbols, and wherein one symbol in each set of symbols is a complex conjugate of the other symbol in the set of symbols.

25. A system for processing wireless data, the system comprising:

means for receiving at an m number of receiving antennas (21, 22, 23, 24) a wireless signal,

**characterized in that**
the wireless signal represents multiple codewords, wherein the wireless signal is transmitted by multiple transmitting antennas (1, 2, 3, 4); and
means for performing the steps of method claim 1, coupled to the means of receiving, for processing the wireless signal to generate the sum signal of claim 1 in order to determine the codewords, under a less than optimal computational process, wherein a number of computations is reduced by approximately a factor of m.

26. The system of claim 25, wherein the wireless signal is transmitted by multiple transmitting antennas (1, 2, 3, 4), and the wireless signal is encoded under a space-time modulation scheme.

27. The system of claim 25, wherein the means for processing includes means for computing eigenvectors based on the m number of receiving antennas.

28. The system of claim 25, wherein:

the wireless signal represents a first block of symbols, and a second block of symbols related to the first block of symbols, wherein each one of the symbols in the first block is related, as a set of symbols, with one of the symbols in the second block of symbols, and wherein one symbol in each set of symbols is a complex conjugate of the other symbol in the set of symbols.


**Patentansprüche**

1. Verfahren zum Verarbeiten eines Drahtlossignals zur Generierung eines Datensignals zur Verwendung in einem Drahtlosempfänger, wobei der Drahtlosempfänger einen Teil eines Drahtlossystems mit einem Drahtlossender bildet, wobei das Verfahren umfasst:

Empfangen von mehreren Signalen durch eine von mehreren Empfängerantennen (21, 22, 23, 24), die dem Drahtlosempfänger zugeordnet sind,
Vormultiplizieren jedes empfangenen Signals mit einem ausgewählten Vormultiplizierwert, der einer ausgewählten von den mehreren Empfängerantennen zugeordnet ist,
Addieren der vormultiplizierten empfangenen Signale zur Generierung eines Summensignals,

**dadurch gekennzeichnet, dass**
die empfangenen Signale durch mehrere Senderantennen (1, 2, 3, 4) gesendet werden, die dem Drahtlossender zugeordnet sind, und
jeder ausgewählte Vormultiplizierwert aus einer Mehrzahl von Übertragungsfunktionswerten entwickelt wird, wobei jeder von den Übertragungsfunktionswerten einer von den mehreren Senderantennen (1, 2, 3, 4) und einer von den mehreren Empfängerantennen (21, 22, 23, 24) zugeordnet ist.

2. Verfahren nach Anspruch 1, wobei die Übertragungsfunktionswerte umfassen:

eine Matrix von Eigenvektoren, die den Übertragungsfunktionswerten zugeordnet sind.

3. Verfahren nach Anspruch 1, wobei die mehreren Sendeantennen (1, 2, 3, 4) codierte Symbole in Blöcken von mehreren Zeitrahmen senden und wobei ein Codewort sämtliche innerhalb eines Zeitrahmens gesendeten codierten Symbole umfasst.

4. Verfahren nach Anspruch 1, wobei die empfangenen Signale einen ersten Block von Symbolen und einen mit dem ersten Block von Symbolen verknüpften zweiten Block von Symbolen darstellen, wobei jedes von den Symbolen in dem ersten Block als Menge von Symbolen mit einem von den Symbolen in dem zweiten Block von Symbolen verknüpft ist und wobei jedes Symbol in jeder Menge von Symbolen eine Komplexkonjugierte des anderen Symbols in der Menge von Symbolen ist.

5. Verfahren nach Anspruch 1, wobei das Verfahren des Weiteren umfasst:

an Empfangsantennen (21, 22, 23, 24) der Anzahl m erfolgendes Empfangen des Drahtlossignals,

wobei das Drahtlossignal mehrere Codeworte darstellt; und
das Summensignal durch Verarbeiten des Drahtlossignals mittels einer Maximum-Likelihood-Detektion zur Bestimmung der Codeworte generiert wird.

6. Verfahren nach Anspruch 5, wobei das Drahtlossignal unter einem Raum-Zeit-Modulationsschema codiert wird.

7. Verfahren nach Anspruch 5, wobei das Verarbeiten ein Berechnen von Eigenvektoren auf Grundlage der Anzahl m von Empfangsantennen (21, 22, 23, 24) beinhaltet.

**8.** Verfahren nach Anspruch 5, wobei das Verfahren der Drahtloskommunikation dient und des Weiteren umfasst:

Senden des codierte Symbole umfassenden Drahtlossignals von den mehreren Sendeantennen (1, 2, 3, 4);

wobei jede von den mehreren Empfangsantennen (21, 22, 23, 24) gesendete codierte Symbole von sämtlichen von den mehreren Sendeantennen (1, 2, 3, 4) empfängt, wobei eine bestimmte Übertragungsfunktion jedem aus einer Sendeantenne und einer Empfangsantenne bestehenden Paar zugeordnet ist;
Generieren von mehreren Übertragungsfunktionen unter Verwendung der empfangenen codierten Symbole, wobei jede Übertragungsfunktion einem aus einer Sendeantenne und einer Empfangsantenne bestehenden Paar zugeordnet ist, das den empfangenen codierten Symbolen zugeordnet ist;
Generieren mehrerer Multiplizierersignale, von denen jedes einer Übertragungsfunktion zugeordnet ist;
Generieren mehrerer kombinierter Übertragungsfunktionswerte, die aus der Kombination der Übertragungsfunktionen generiert werden; und
wobei der Schritt des Verarbeitens umfasst:

Multiplizieren der empfangenen codierten Signale des empfangenen Drahtlossignals mit einem jeweiligen Multiplizierersignal;
Addieren der multiplizierten Signale; und
Decodieren der empfangenen codierten Symbole einschließlich des Berechnens einer Untermenge einer Menge sämtlicher möglicher Werte der empfangenen codierten Symbole unter Verwendung der addierten Signale und der kombinierten Übertragungsfunktionswerte.

**9.** Verfahren nach Anspruch 8, wobei das Generieren der mehreren kombinierten Übertragungsfunktionswerte umfasst:

Entwickeln einer Matrix aus den Übertragungsfunktionswerten;
Ausfindigmachen von Eigenwerten der Matrix;
Erstellen eines Maximaleigenvektors der Matrix; und
Generieren der Untermenge der Menge sämtlicher möglicher Werte der empfangenen codierten Symbole aus dem Maximaleigenvektor.

**10.** Verfahren nach Anspruch 5, wobei die mehreren Sendeantennen (1, 2, 3, 4) die codierten Symbole in Blöcken von mehreren Zeitrahmen senden und wobei ein Codewort sämtliche innerhalb eines Zeitrahmens gesendeten codierten Symbole umfasst.

**11.** Verfahren nach Anspruch 10, wobei ein Codewort

$$c_1^1 c_1^2 c_1^3 \ldots c_1^4 c_2^1 c_2^2 c_2^3 \ldots c_2^4 c_3^1 c_3^2 c_3^3 \ldots c_3^4 \ldots c_m^1 c_m^2 c_m^3 \ldots c_m^4$$

umfasst, wobei der obere Index die Sendeantenne und der untere Index die Sendezeit bezeichnen.

**12.** Verfahren nach Anspruch 11, wobei die kombinierten Übertragungsfunktionswerte mit

$$\gamma_i = \sum_{j=1}^{m} \lambda_j \alpha_{ij}$$

bezeichnet werden, wobei $\alpha_{ij}$ die Übertragungsfunktion zwischen der Sendeantenne i und der Empfangsantenne j und $\lambda_j$ den größten Eigenwert einer die Elemente $\alpha_{ij}$ enthaltenden Matrix bezeichnen, und
wobei das Berechnen einer Untermenge einer Menge sämtlicher möglicher Werte der empfangenen codierten Symbole das Minimieren von

$$\sum_{t=1}^{L}\left|R_t - \dot{\sum_{i=1}}\gamma_i c_i^t\right|^2$$

unter sämtlichen möglichen Codeworten umfasst, wobei $R_t$ das an einer einzelnen Antenne zur Zeit t empfangene Signal bezeichnet.

**13.** Signalverarbeitungsvorrichtung zur Verwendung in einem Drahtlosempfänger, wobei der Drahtlosempfänger einen Teil eines Drahtlossystems mit einem Drahtlossender bildet, der mehrere Sendeantennen (1, 2, 3, 4) einsetzt, und wobei der Drahtlosempfänger zwei oder mehr Empfangsantennen (21, 22, 23, 24) zum Empfangen von von den mehreren Sendeantennen (1, 2, 3, 4) gesendeten Signalen beinhaltet, wobei die Signalverarbeitungsvorrichtung umfasst:

einen Eingabeabschnitt zum Empfangen von mehreren von den zwei oder mehr Empfangsantennen (21, 22, 23, 24) bereitgestellten Signalen;
einen mit dem Eingabeabschnitt gekoppelten Verarbeitungsabschnitt zum Entwickeln von Multiplizierwerten aus Übertragungsfunktionswerten, die den mehreren Sendeantennen (1, 2, 3, 4) und den zwei oder mehr Empfangsantennen (21, 22, 23, 24) zugeordnet sind, wobei der Verarbeitungsabschnitt die Multiplizierwerte auf Grundlage einer fastoptimalen Berechnungsverarbeitung (less than optimal computational process) entwickelt;
einen mit dem Eingabeabschnitt und dem Verarbeitungsabschnitt gekoppelten Multiplizierabschnitt, der die empfangenen Signale mit den Multiplizierwerten multipliziert, um multiplizierte empfangene Signale zu erzeugen, wobei jeder Multiplizierwert aus einer Mehrzahl von Übertragungsfunktionswerten entwickelt wird und wobei jeder aus der Mehrzahl von Übertragungsfunktionswerten einer von den mehreren Senderantennen (1, 2, 3, 4) und einer von den mehreren Empfängerantennen (21, 22, 23, 24) zugeordnet ist; und
einen mit dem Multiplizierabschnitt gekoppelten Summierabschnitt (30), der die multiplizierten empfangenen Signale empfängt und addiert.

**14.** Signalverarbeitungsvorrichtung nach Anspruch 13, wobei die Übertragungsfunktionswerte umfassen:

eine Matrix von Eigenvektoren, die den Übertragungsfunktionswerten zugeordnet sind.

**15.** Signalverarbeitungsvorrichtung nach Anspruch 13, wobei die mehreren Sendeantennen (1, 2, 3, 4) codierte Symbole in Blöcken von mehreren Zeitrahmen senden und wobei ein Codewort sämtliche innerhalb eines Zeitrahmens gesendeten codierten Symbole umfasst.

**16.** Vorrichtung nach Anspruch 13, umfassend:

einen oder mehrere elektronische Schaltungen, wobei die elektronischen Schaltungen beinhalten:

einen Eingabeabschnitt zum Empfangen von Eingabesignalen von jeder von mehreren Empfangsantennen (21, 22, 23, 24), wobei eine Übertragungsfunktion jedem aus einer Sendeantenne und einer Empfangsantenne bestehenden Paar zugeordnet ist;
einen ersten Signalverarbeitungsabschnitt zum Generieren von mehreren Übertragungsfunktionswerten zur Darstellung von Kanälen, über die die Eingabesignale empfangen werden, wobei jede Übertragungsfunktion einem aus einer Sendeantenne und einer Empfangsantenne bestehenden Paar zugeordnet ist, das den empfangenen codierten Symbolen zugeordnet ist;
einen zweiten Signalverarbeitungsabschnitt zum Generieren von mehreren kombinierten Übertragungsfunktionswerten, die aus einer Kombination der Übertragungsfunktionen generiert sind;
einen Multiplizierer zum Multiplizieren der empfangenen Eingabesignale mit einem jeweiligen kombinierten Übertragungsfunktionswert;
einen mit dem Multiplizierer gekoppelten Addierer zum Addieren der multiplizierten Signale; und
einen Ausgabeabschnitt zum Ausgeben der addierten Signale zur Decodierung.

**17.** Vorrichtung nach Anspruch 16, wobei der zweite Signalverarbeitungsabschnitt mehrere kombinierte Übertragungsfunktionswerte durch Entwickeln einer Matrix aus den Übertragungsfunktionswerten, Ausfindigmachen von Eigenwerten der Matrix, Erstellen eines Maximaleigenvektors der Matrix und Generieren einer Untermenge von Werten aus einer Menge sämtlicher möglicher Werte von empfangenen codierten Symbolen aus dem Maximaleigenvektor generiert.

**18.** Vorrichtung nach Anspruch 16, wobei das Eingabesignal gesendete Codeworte beinhaltet, wobei die mehreren Sendeantennen die codierten Symbole in Blöcken von mehreren Zeitrahmen senden und wobei ein Codewort sämtliche innerhalb eines Zeitrahmens gesendeten codierten Symbole umfasst.

**19.** System nach Anspruch 18, wobei ein Codewort

$$c_1^1 c_1^2 c_1^3 \ldots c_1^4 c_2^1 c_2^2 c_2^3 \ldots c_2^4 c_3^1 c_3^2 c_3^3 \ldots c_3^4 \ldots c_m^1 c_m^2 c_m^3 \ldots c_m^4$$

umfasst, wobei der obere Index die Sendeantenne und der untere Index die Sendezeiten bezeichnet.

**20.** Vorrichtung nach Anspruch 16, des Weiteren umfassend eine mit dem Ausgabeabschnitt gekoppelte Decodierschaltung, wobei die Decodierschaltung dafür ausgelegt ist, eine Untermenge aus einer Menge sämtlicher möglicher Werte von Codeworten, die den Eingabesignalen zugeordnet sind, unter Verwendung der addierten Signale und der kombinierten Übertragungsfunktionswerte zu berechnen.

**21.** Vorrichtung nach Anspruch 20, wobei die kombinierten Übertragungsfunktionswerte mit

$$\gamma_i = \sum_{j=1}^{m} \lambda_j \alpha_{ij}$$

bezeichnet werden, wobei $\alpha_{ij}$ die Übertragungsfunktion zwischen der Sendeantenne i und der Empfangsantenne j und $\lambda_j$ den größten Eigenwert einer die Elemente $\alpha_{ij}$ enthaltenden Matrix bezeichnen, und wobei die Decodiereinheit eine Untermenge aus einer Menge sämtlicher möglicher Werte durch Minimieren von

$$\sum_{t=1}^{L} \left| R_t - \sum_{i=1}^{n} \gamma_i c_i^t \right|^2$$

unter sämtlichen möglichen Codeworten berechnet, wobei $R_t$ das empfangene Signal an einer einzelnen Antenne im Zeitintervall t ist.

**22.** Vorrichtung nach Anspruch 20, wobei die Decodiereinheit ein Maximum-Likelihood-Detektor ist.

**23.** Signalverarbeitungsvorrichtung nach Anspruch 13, wobei die empfangenen Signale einen ersten Block von Symbolen und einen mit dem ersten Block von Symbolen verknüpften zweiten Block von Symbolen darstellen, wobei jedes von den Symbolen in dem ersten Block als Menge von Symbolen mit einem von den Symbolen in dem zweiten Block von Symbolen verknüpft ist und wobei jedes Symbol in jeder Menge von Symbolen eine Komplexkonjugierte des anderen Symbols in der Menge von Symbolen ist.

**24.** Vorrichtung nach Anspruch 16, wobei die Eingabesignale einen ersten Block von Symbolen und einen mit dem ersten Block von Symbolen verknüpften zweiten Block von Symbolen darstellen, wobei jedes von den Symbolen in dem ersten Block als Menge von Symbolen mit einem von den Symbolen in dem zweiten Block von Symbolen verknüpft ist und wobei ein Symbol in jeder Menge von Symbolen eine Komplexkonjugierte des anderen Symbols in der Menge von Symbolen ist.

**25.** System zum Verarbeiten von Drahtlosdaten, wobei das System umfasst:

Mittel zum Empfangen eines Drahtlossignals an m Empfangsantennen (21, 22, 23, 24),

**dadurch gekennzeichnet, dass**
das Drahtlossignal mehrere Codeworte darstellt, wobei das Drahtlossignal durch mehrere Sendeantennen (1, 2, 3, 4) gesendet wird; und
mit dem Mittel zum Empfangen gekoppelte Mittel zum Durchführen der Schritte des Verfahrens von Anspruch 1, zum Verarbeiten des Drahtlossignals zur Generierung des Summensignals von Anspruch 1 zur Bestimmung der Codeworte bei einer fastoptimalen Berechnungsverarbeitung (less than optimal computational process), wobei die Anzahl von Berechnungen um annähernd einen Faktor m verringert ist.

26. System nach Anspruch 25, wobei das Drahtlossignal von mehreren Sendeantennen (1, 2, 3, 4) gesendet wird und das Drahtlossignal unter einem Raum-Zeit-Modulationsschema codiert wird.

27. System nach Anspruch 25, wobei das Mittel zum Verarbeiten Mittel zum Berechnen von Eigenvektoren auf Grundlage der Anzahl m von Empfangsantennen beinhaltet.

28. System nach Anspruch 25, wobei:

das Drahtlossignal einen ersten Block von Symbolen und einen mit dem ersten Block von Symbolen verknüpften zweiten Block von Symbolen darstellt, wobei jedes von den Symbolen in dem ersten Block als Menge von Symbolen mit einem von den Symbolen in dem zweiten Block von Symbolen verknüpft ist und wobei ein Symbol in jeder Menge von Symbolen eine Komplexkonjugierte des anderen Symbols in der Menge von Symbolen ist.

## Revendications

1. Procédé pour traiter un signal sans fil pour générer un signal de données à utiliser dans un récepteur sans fil, dans lequel le récepteur sans fil fait partie d'un système sans fil ayant un émetteur sans fil, le procédé comprenant les étapes consistant à :

recevoir de multiples signaux par l'une de multiples antennes de réception (21, 22, 23, 24) associées au récepteur sans fil,
pré-multiplier chaque signal reçu par une valeur de pré-multiplication sélectionnée associée à l'une sélectionnée des multiples antennes de réception,
ajouter les signaux reçus pré-multipliés pour générer un signal de somme,

**caractérisé en ce que**
les signaux reçus sont émis par de multiples antennes d'émission (1, 2, 3, 4) associées à l'émetteur sans fil, et chaque valeur de pré-multiplication sélectionnée est développée à partir d'une pluralité de valeurs de fonction de transfert, dans lequel chacune desdites valeurs de fonction de transfert est associée à l'une des multiples antennes d'émission (1, 2, 3, 4) et à l'une des multiples antennes de réception (21, 22, 23, 24).

2. Procédé selon la revendication 1, dans lequel les valeurs de fonction de transfert comprennent :

une matrice de vecteurs propres associés aux valeurs de fonction de transfert.

3. Procédé selon la revendication 1, dans lequel les multiples antennes d'émission (1, 2, 3, 4) émettent des symboles codés en blocs de multiples trames de temps, et dans lequel un mot de code comprend tous les symboles codés transmis à l'intérieur d'une trame de temps.

4. Procédé selon la revendication 1, dans lequel les signaux reçus représentent un premier bloc de symboles, et un deuxième bloc de symboles lié au premier bloc de symboles, dans lequel chacun des symboles dans le premier bloc est lié, sous la forme d'un ensemble de symboles, à l'un des symboles dans le deuxième bloc de symboles, et dans lequel un symbole dans chaque ensemble de symboles est un complexe conjugué de l'autre symbole dans l'ensemble de symboles.

5. Procédé selon la revendication 1, le procédé comprenant en outre l'étape consistant à :

recevoir à un nombre m d'antennes de réception (21, 22, 23, 24) le signal sans fil,

dans lequel le signal sans fil représente de multiples mots de.code ; et
le signal de somme est généré en traitant le signal sans fil au moyen d'une détection de probabilité maximale pour déterminer les mots de code.

6. Procédé selon la revendication 5, dans lequel le signal sans fil est codé selon un schéma de modulation espace-temps.

7. Procédé selon la revendication 5, dans lequel le traitement comprend le calcul des vecteurs propres sur la base du nombre m d'antennes de réception (21, 22, 23, 24).

8. Procédé selon la revendication 5, le procédé étant destiné à la communication sans fil et comprenant en outre les étapes consistant à :

émettre ledit signal sans fil qui comprend des symboles codés à partir desdites multiples antennes d'émission (1, 2, 3, 4) ;
recevoir, par chacune desdites multiples antennes de réception (21, 22, 23, 24), des symboles codés émis à partir de toutes les multiples antennes d'émission (1, 2, 3, 4), dans lequel une fonction de transfert particulière est associée à chaque paire antenne d'émission-antenne de réception ;
générer de multiples fonctions de transfert en utilisant les symboles codés reçus, dans lequel chaque fonction de transfert est associée à une paire d'antennes d'émission-réception associée aux symboles codés reçus ;
générer de multiples signaux multiplicateurs, chacun étant associé à une fonction de transfert ;
générer de multiples valeurs de fonction de transfert combinées générées par la combinaison des fonctions de transfert ; et

dans lequel ladite étape de traitement comprend les étapes consistant à :

multiplier les signaux codés reçus dudit signal sans fil reçu par un signal multiplicateur respectif ;
ajouter les signaux multipliés ; et
décoder les symboles codés reçus, y compris en calculant un sous-ensemble d'un ensemble de toutes les valeurs possibles des symboles codés reçus, en utilisant les signaux ajoutés et les valeurs de fonction de transfert combinées.

9. Procédé selon la revendication 8, dans lequel l'étape consistant à générer les multiples valeurs de fonction de transfert combinées comprend les étapes consistant à :

développer une matrice à partir des valeurs de fonction de transfert ;
trouver des valeurs propres de la matrice ;
créer un vecteur propre maximal de la matrice ; et
générer le sous-ensemble de l'ensemble de toutes les valeurs possibles des symboles codés reçus à partir du vecteur propre maximal.

10. Procédé selon la revendication 5, dans lequel les multiples antennes d'émission (1, 2, 3, 4) émettent les symboles codés en blocs de multiples trames de temps, et dans lequel un mot de code comprend tous les symboles codés transmis à l'intérieur d'une trame de temps.

11. Procédé selon la revendication 10, dans lequel un mot de code comprend

$$C^1_1 C^2_1 C^3_1 \ldots C^4_1 C^1_2 C^2_2 C^3_2 \ldots C^4_2 C^1_3 C^2_3 C^3_3 \ldots C^4_3 \ldots C^1_m C^2_m C^3_m \ldots C^4_m,$$

où l'exposant désigne l'antenne d'émission et l'indice désigne l'instant d'émission.

12. Procédé selon la revendication 11, dans lequel les valeurs de fonction de transfert combinées sont désignées par

$$y_i = \sum_{j=1}^{m} \lambda_j \, \alpha_{ij} \,,$$ dans lequel $\alpha_{ij}$ est la fonction de transfert entre l'antenne d'émission i et l'antenne de réception j et $\lambda_j$ est la valeur propre la plus élevée d'une matrice contenant des éléments $\alpha_{ij}$, et dans lequel le calcul d'un sous-ensemble d'un ensemble de toutes les valeurs possibles du symbole codé reçu comprend la minimisation de $$\sum_{t=1}^{L} \left| R_t - \sum_{i=1}^{n} y_i \, c_t^i \right|^2$$ à partir de tous les mots de code possibles, dans lequel $R_t$ est le signal reçu par une antenne unique à l'intervalle de temps t.

13. Appareil de traitement de signal à utiliser dans un récepteur sans fil, dans lequel le récepteur sans fil fait partie d'un système sans fil ayant un émetteur sans fil employant de multiples antennes d'émission (1, 2, 3, 4), et dans lequel le récepteur sans fil comprend deux ou plus d'antennes de réception (21, 22, 23, 24) pour recevoir des signaux émis par les multiples antennes d'émission (1, 2, 3, 4), l'appareil de traitement de signal comprenant :

une section d'entrée pour recevoir de multiples signaux fournis par les deux ou plus d'antennes de réception (21, 22, 23, 24) ;
une section de traitement qui est couplée à la section d'entrée pour développer des valeurs de multiplication à partir de valeurs de fonction de transfert associées aux multiples antennes d'émission (1, 2, 3, 4) et associées aux deux ou plus d'antennes de réception (21, 22, 23, 24), dans lequel la section de traitement développe les valeurs de multiplication sur la base d'un processus de calcul moins qu'optimal ;
une section de multiplication, couplée à la section d'entrée et à la section de traitement, qui multiplie les signaux reçus par les valeurs de multiplication pour produire des signaux reçus multipliés, dans lequel chaque valeur de multiplication est développée à partir d'une pluralité de valeurs de fonction de transfert, et dans lequel chacune de ladite pluralité de valeurs de fonction de transfert est associée à l'une des multiples antennes d'émission (1, 2, 3, 4) et à l'une des multiples antennes de réception (21, 22, 23, 24) ; et
une section d'addition (30), couplée à la section de multiplication, qui reçoit et ajoute les signaux reçus multipliés.

14. Appareil de traitement de signal selon la revendication 13, dans lequel les valeurs de fonction de transfert comprennent :

une matrice de vecteurs propres associés aux valeurs de fonction de transfert.

15. Appareil de traitement de signal selon la revendication 13, dans lequel les multiples antennes d'émission (1, 2, 3, 4) émettent des symboles codés en blocs de multiples trames de temps, et dans lequel un mot de code comprend tous les symboles codés émis à l'intérieur d'une trame de temps.

16. Appareil selon la revendication 13, comprenant :

un ou plusieurs circuits électroniques, dans lequel les circuits électroniques comprennent :

une portion d'entrée pour recevoir des signaux d'entrée de chacune des multiples antennes de réception (21, 22, 23, 24), dans lequel une fonction de transfert est associée à chaque paire d'antenne d'émission-antenne de réception ;
une première section de traitement de signal pour générer de multiples valeurs de fonction de transfert représentant des canaux sur lesquels les signaux d'entrée sont reçus, dans lequel chaque fonction de transfert est associée à une paire d'antennes d'émission-réception associée aux symboles codés reçus ;
une deuxième section de traitement de signal pour générer de multiples valeurs de fonction de transfert combinées générées en combinant les fonctions de transfert ;
un multiplicateur pour multiplier les signaux d'entrée reçus par une valeur combinée de fonction de transfert respective ;
un additionneur couplé au multiplicateur pour ajouter les signaux multipliés ; et
une portion de sortie pour délivrer les signaux ajoutés pour décodage.

17. Appareil selon la revendication 16, dans lequel la deuxième section de traitement de signal génère de multiples valeurs de fonction de transfert combinées en développant une matrice à partir des valeurs de fonction de transfert, en trouvant des valeurs propres de la matrice, en créant un vecteur propre maximal de la matrice, et en générant un sous-ensemble de valeurs à partir d'un ensemble de toutes les valeurs possibles des symboles codés reçus à partir du vecteur propre maximal.

**18.** Appareil selon la revendication 16, dans lequel le signal d'entrée comprend des mots de code émis, dans lequel les multiples antennes d'émission émettent les symboles codés en blocs de multiples trames de temps, et dans lequel un mot de code comprend tous les symboles codés transmis à l'intérieur d'une trame de temps.

**19.** Système selon la revendication 18, dans lequel un mot de code comprend

$$C^1{}_1C^2{}_1C^3{}_1 \ldots C^4{}_1C^1{}_2C^2{}_2C^3{}_2 \ldots C^4{}_2C^1{}_3C^2{}_3C^3{}_3 \ldots C^4{}_3 \ldots C^1{}_mC^2{}_mC^3{}_m \ldots C^4{}_m,$$

où l'exposant désigne l'antenne d'émission et l'indice désigne les instants d'émission.

**20.** Appareil selon la revendication 16, comprenant en outre un circuit de décodage couplé à la portion de sortie, dans lequel le circuit de décodage est configuré pour calculer un sous-ensemble à partir d'un ensemble de toutes les valeurs possibles de mots de code associés aux signaux d'entrée et en employant les signaux ajoutés et les valeurs de fonction de transfert combinées.

**21.** Appareil selon la revendication 20, dans lequel les valeurs de fonction de transfert combinées sont désignées par

$$y_i \;=\; \sum_{j=1}^{m} \lambda_j \, \alpha_{ij} \, \text{,}$$ dans lequel $\alpha_{ij}$ est la fonction de transfert entre l'antenne d'émission i et l'antenne de réception j et $\lambda_j$ est la valeur propre la plus élevée d'une matrice contenant des éléments $\alpha_{ij}$, et dans lequel le circuit de décodage calcule un sous-ensemble d'un ensemble de toutes les valeurs possibles en minimisant

$$\sum_{t=1}^{L} \left| R_t - \sum_{i=1}^{n} y_i \, c_t^i \right|^2$$ à partir de tous les mots de code possibles, dans lequel $R_t$ est le signal reçu par une antenne unique à l'intervalle de temps t.

**22.** Appareil selon la revendication 20, dans lequel le circuit de décodage est un détecteur de probabilité maximale.

**23.** Appareil de traitement de signal selon la revendication 13, dans lequel les signaux reçus représentent un premier bloc de symboles, et un deuxième bloc de symboles lié au premier bloc de symboles, dans lequel chacun des symboles dans le premier bloc est lié, sous la forme d'un ensemble de symboles, à l'un des symboles dans le deuxième bloc de symboles, et dans lequel un symbole dans chaque ensemble de symboles est un complexe conjugué de l'autre symbole dans l'ensemble de symboles.

**24.** Appareil selon la revendication 16, dans lequel les signaux d'entrée représentent un premier bloc de symboles, et un deuxième bloc de symboles lié au premier bloc de symboles, dans lequel chacun des symboles dans le premier bloc est lié, sous la forme d'un ensemble de symboles, à l'un des symboles dans le deuxième bloc de symboles, et dans lequel un symbole dans chaque ensemble de symboles est un complexe conjugué de l'autre symbole dans l'ensemble de symboles.

**25.** Système pour traiter des données sans fil, le système comprenant :

des moyens pour recevoir à un nombre m d'antennes de réception (21, 22, 23, 24) un signal sans fil,

**caractérisé en ce que**
le signal sans fil représente de multiples mots de code, dans lequel le signal sans fil est émis par de multiples antennes d'émission (1, 2, 3, 4) ; et
des moyens pour effectuer l'étape du procédé selon la revendication 1, couplés aux moyens de réception, pour traiter le signal sans fil pour générer le signal de somme de la revendication 1 dans le but de déterminer les mots de code, dans le cadre d'un processus de calcul moins qu'optimal, dans lequel un nombre de calculs est réduit d'environ un facteur de m.

26. Système selon la revendication 25, dans lequel le signal sans fil est émis par de multiples antennes d'émission (1, 2, 3, 4), et le signal sans fil est codé dans le cadre d'un schéma de modulation espace-temps.

27. Système selon la revendication 25, dans lequel les moyens de traitement comprennent des moyens pour calculer des vecteurs propres sur la base du nombre m d'antennes de réception.

28. Système selon la revendication 25, dans lequel :

le signal sans fil représente un premier bloc de symboles, et un deuxième bloc de symboles lié au premier bloc de symboles, dans lequel chacun des symboles dans le premier bloc est lié, sous la forme d'un ensemble de symboles, à l'un des symboles dans le deuxième bloc de symboles, et dans lequel un symbole dans chaque ensemble de symboles est un complexe conjugué de l'autre symbole dans l'ensemble de symboles.

FIG. 1 (Prior Art)

RECEIVER

$\alpha_{11}^*$  $\alpha_{12}^*$  $\alpha_{14}^*$  $\alpha_{13}^*$

TRANSMITTER

$\alpha_{12}$

$\alpha_{11}$

CODER

$\alpha_{14}$

$\alpha_{13}$

ADDER

DETECTOR

EP 1 445 875 B1

FIG. 2

EP 1 445 875 B1

**EP 1 445 875 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 06861397 P
- US 6115427 A
- US 5274844 A
- GB 2313237 A